(19) Europäisches Patentamt
European Patent Office
Office européen des brevets

(11) EP 4 733 369 A1

(12) EUROPEAN PATENT APPLICATION
published in accordance with Art. 153(4) EPC

(43) Date of publication:
**29.04.2026 Bulletin 2026/18**

(21) Application number: **24831738.0**

(22) Date of filing: **17.06.2024**

(51) International Patent Classification (IPC):
***C09K 3/16*** *(2006.01)* ***C08H 7/00*** *(2011.01)*
***C08L 1/00*** *(2006.01)* ***C08L 97/00*** *(2006.01)*
***C08L 101/00*** *(2006.01)* ***D06M 15/17*** *(2006.01)*
***D06M 15/53*** *(2006.01)*

(52) Cooperative Patent Classification (CPC):
**C08H 6/00; C08L 1/00; C08L 97/00; C08L 101/00; C09K 3/16; D06M 15/17; D06M 15/53**

(86) International application number:
**PCT/JP2024/021834**

(87) International publication number:
**WO 2025/004875 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 JP 2023104414**
**26.06.2023 JP 2023104416**

(71) Applicant: **Nippon Paper Industries Co., Ltd.**
**Tokyo 114-0002 (JP)**

(72) Inventors:
- **KONO, Masaru**
**Tokyo 114-0002 (JP)**
- **NAKAMURA, Akihiko**
**Tokyo 114-0002 (JP)**
- **YAMAJI, Momoko**
**Tokyo 114-0002 (JP)**
- **KANENAKA, Tsubasa**
**Tokyo 114-0002 (JP)**

(74) Representative: **Müller-Boré & Partner Patentanwälte PartG mbB**
**Friedenheimer Brücke 21**
**80639 München (DE)**

# (54) ANTI-STATIC AGENT

(57) An object of the present invention is to provide an antistatic agent capable of exhibiting good antistatic effects and high stability, regardless of a substrate. The present invention provides the antistatic agent and uses thereof, the antistatic agent including a lignin derivative compound including: a constituent unit (I) derived from a lignin sulfonic acid compound; and a constituent unit (II) derived from an aromatic water-soluble compound including at least an aromatic water-soluble compound having an alkylene oxide chain.

Fig. 1

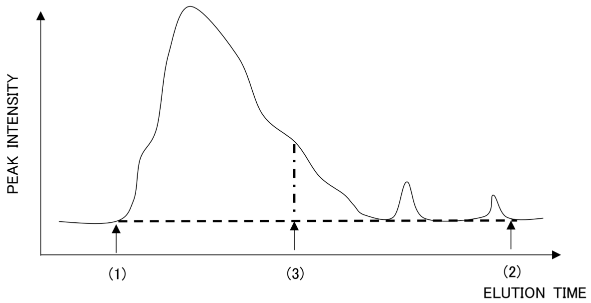


GPC CHART OF LIGNIN DERIVATIVE COMPOUND
(CONCEPTUAL DIAGRAM)



Processed by Luminess, 75001 PARIS (FR)

## Description

Field

The present invention relates to an antistatic agent.

Background

As antistatic means to be used for articles, such as clothing, molded resin products, and automobile bodies, antistatic agents to be applied or sprayed on surfaces of the above-mentioned articles serving as substrates have been developed. For example, Patent Literature 1 describes that a combination of a synthetic layered silicate, an organic resin binder, a solvent including water as a main component, and a compound including an alkoxy group or a compound of a divalent or more metal, that is, a polyvalent metal selected from main-group metals and transition metals can be used as a water-resistant antistatic agent. Patent Literature 2 describes that an antistatic agent including nano-sized tin oxide powder, a binder, and water can provide uniform and excellent antistatic effects.

In contrast, as an antistatic means for resin molded products, an antistatic agent to be kneaded into a resin material and used has been developed. For example, Patent Literature 3 describes that a high molecular weight antistatic agent for thermoplastic resin that includes a polyurethane compound does not lose its antistatic performance even after washing with water or the like. Patent Literature 4 describes that a combination of a specific anionic surfactant and a specific nonionic surfactant exhibits excellent antistatic effects.

Citation List

Patent Literature

Patent Literature 1: Japanese Patent Application Laid-open No. 2020-122040
Patent Literature 2: WO 2020/202593
Patent Literature 3: Japanese Patent Application Laid-open No. 2018-178042
Patent Literature 4: Japanese Patent Application Laid-open No. 2018-123306

Summary

Technical Problem

However, some conventional antistatic agents are not sufficiently antistatic for some types of substrates. In the formulation, an antistatic component (an active component) is not stable and sometimes had poor solvent dispersibility. Conventional antistatic agents to be kneaded-in have insufficient antistatic effects for some types of resin compositions. Therefore, an object of the present invention is to provide an antistatic agent capable of exhibiting a good antistatic effect and high stability, regardless of the type of a substrate.

Solution to Problem

The present invention provides the following [1] to [13].

[1] An antistatic agent including a lignin derivative compound, wherein the lignin derivative compound includes the following constituent units (I) and (II) below:

- a constituent unit (I) derived from a lignin sulfonic acid compound; and
- a constituent unit (II) derived from an aromatic water-soluble compound including at least an aromatic water-soluble compound having an alkylene oxide chain.

[2] The antistatic agent according to [1], wherein the aromatic water-soluble compound having the alkylene oxide chain includes an aromatic water-soluble compound having an alkylene oxide chain with an average number of moles of alkylene oxide added of 25 or more.

[3] The antistatic agent according to [2], wherein a weight ratio (I)/(II) of the constituent unit (I) to the constituent unit (II) is within a range of 1/99 to 99/1.

[4] The antistatic agent according to any one of [1] to [3], wherein the aromatic water-soluble compound further includes an aromatic compound having a carboxy group and/or an aromatic compound having a sulfo group.
[5] The antistatic agent according to any one of [1] to [4], wherein the lignin derivative compound represented by a formula below has a peak area ratio of a high molecular weight component of 80% or more:

Peak area ratio of high molecular weight components = (area value of high molecular weight components in GPC chart (280 nm))/(area value of all components in GPC chart (280 nm)).

[6] The antistatic agent according to any one of [1] to [5], wherein the antistatic agent is used for resin.
[7] The antistatic agent according to [6], wherein the antistatic agent is used for resin kneading or surface treatment.
[8] A resin composition, including:

the antistatic agent according to any one of [1] to [7]; and
a resin substrate.

[9] The resin composition according to [8], wherein a content of the antistatic agent with respect to 100% by weight of the resin substrate is 1.5% by weight or higher.
[10] The resin composition according to [8] or [9], wherein the resin substrate further includes a cellulosic material.
[11] A molded product of the resin composition according to any one of [8] to [10].
[12] A method of treating a substrate, the method comprising
kneading the antistatic agent according to any one of [1] to [7] into the substrate or applying the antistatic agent to a surface of the substrate.
[13] The method according to [12], wherein the substrate is a substrate including a cellulosic material and/or a resin material.

In one aspect of the present invention, the following [1-1] to [1-8] are provided.

[1-1] An antistatic agent including a lignin derivative compound, wherein the lignin derivative compound includes the following constituent units (I) and (II) below:

the constituent unit (I) derived from a lignin sulfonic acid compound; and
the constituent unit (II) derived from an aromatic water-soluble compound including at least an aromatic water-soluble compound having an alkylene oxide chain.

[1-2] The antistatic agent according to [1-1], wherein the aromatic water-soluble compound having the alkylene oxide chain includes an aromatic water-soluble compound having an alkylene oxide chain with an average number of moles of alkylene oxide added of 25 or more.
[1-3] The antistatic agent according to [1-2], wherein the weight ratio (I)/(II) of the constituent unit (I) to the constituent unit (II) is within a range of 1/99 to 99/1.
[1-4] The antistatic agent according to any one of [1-1] to [1-3], wherein the aromatic water-soluble compound further includes an aromatic compound having a carboxy group and/or an aromatic compound having a sulfo group.
[1-5] The antistatic agent according to any one of [1-1] to [1-4], wherein the lignin derivative compound represented by the following formula has a peak area ratio of high molecular weight components of 80% or higher.

Peak area ratio of high molecular weight components = (area value of high molecular weight components in GPC chart (280 nm))/(area value of all components in GPC chart (280 nm))

[1-6] A surface treatment method, including giving treatment to a substrate surface with the antistatic agent according to any one of [1-1] to [1-5].
[1-7] The method according to [6], wherein the substrate is a substrate including a cellulosic material and/or a resin material.
[1-8] A laminated material, including:

a substrate; and
an antistatic layer including a lignin derivative compound and configured to cover at least a part of a surface of the substrate, the lignin derivative compound including constituent units (I) and (II) below:

the constituent unit (I) derived from a lignin sulfonic acid compound; and
the constituent unit (II) derived from an aromatic water-soluble compound including at least an aromatic water-soluble compound having an alkylene oxide chain.

In another aspect of the present invention, the following [2-1] to [2-10] are provided.

[2-1] An antistatic agent for resin including a lignin derivative compound, wherein the lignin derivative compound includes constituent units (I) and (II) below.

the constituent unit (I) derived from a lignin sulfonic acid compound.
the constituent unit (II) derived from an aromatic water-soluble compound including at least an aromatic water-soluble compound having an alkylene oxide chain.

[2-2] The antistatic agent according to [2-1], wherein the aromatic water-soluble compound having the alkylene oxide chain includes an aromatic water-soluble compound having an alkylene oxide chain with an average number of moles of alkylene oxide added of 25 or more.
[2-3] The antistatic agent according to [2-1] or [2-2], wherein the weight ratio (I)/(II) of the constituent unit (I) to the constituent unit (II) is within a range of 1/99 to 99/1.
[2-4] The antistatic agent according to any one of [2-1] to [2-3], wherein the aromatic water-soluble compound further includes an aromatic compound having a carboxy group and/or an aromatic compound having a sulfo group.
[2-5] The antistatic agent according to any one of [2-1] to [2-4], wherein the lignin derivative compound expressed by the following formula has a peak area ratio of high molecular weight components of 80% or more.

Peak area ratio of high molecular weight components = (area value of high molecular weight components in GPC chart (280 nm))/(area value of all components in GPC chart (280 nm))

[2-6] A method for surface treatment of resin, including kneading the antistatic agent according to [2-1] or [2-2] into a resin substrate.
[2-7] A resin composition, including: the antistatic agent according to any one of [2-1] to [2-5]; and a resin substrate.
[2-8] The resin composition according to [2-7], wherein the content of the antistatic agent is 1.5% by weight or higher with respect to 100% by weight of the resin substrate.
[2-9] The resin composition according to [2-7] or [2-8], wherein the resin substrate further includes a cellulosic material.
[2-10] A molded product of the resin composition according to [2-7] or [2-8].

Advantageous Effects of Invention

The present invention can provide an antistatic agent capable of exhibiting good antistatic effects regardless of a substrate and/or a resin composition. The antistatic agent according to the present invention can exhibit high stability.

Brief Description of Drawings

FIG. 1 is a conceptual diagram illustrating a GPC chart (UV detection wavelength of 280 nm) of a lignin derivative compound to explain the peak area ratio of high molecular weight components.

Description of Embodiments

[1. Antistatic agent]

An antistatic agent includes the following lignin derivative compound as an active component.

[1.1 Constituent units of lignin derivative compound]

The lignin derivative compound is a polymer including at least constituent units (I) and (II). Lignin, which is a main backbone of the constituent unit (I), has a very complicated molecular structure, and it is therefore difficult to uniformly specify the chemical structure of the lignin derivative compound by a general formula or other means.

- Constituent unit (I) -

The constituent unit (I) is a constituent unit derived from a lignin sulfonic acid compound.

The lignin sulfonic acid compound is a compound having a skeleton in which a sulfo group (a sulfonic acid group) is introduced by the cleavage of carbon of a side chain at the $\alpha$-position in the hydroxyphenylpropane structure of lignin. The structure of the above-mentioned skeleton portion is expressed by Formula (1).

[Chemical Formula 1]

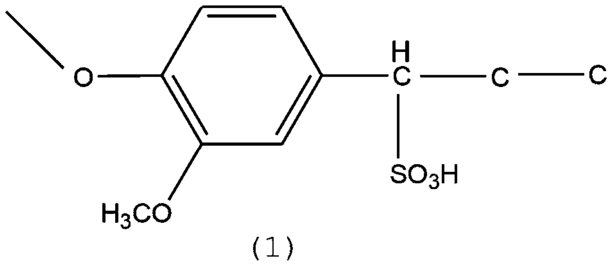

(1)

The lignin sulfonic acid compound may be a modified compound having the skeleton expressed by Formula (1) above (hereinafter, referred to as "a modified lignin sulfonic acid compound"). A method for the modification is not particularly limited, and examples of the method include: chemical modification methods, such as hydrolysis, alkylation, alkoxylation, sulfonation, sulfonate esterification, sulfomethylation, aminomethylation, and desulfonation; and a method of molecular weight fractionation of the lignin sulfonic acid compound by ultrafiltration. Among these methods, one or two or more chemical modification methods selected from hydrolysis, alkoxylation, desulfonation, and alkylation are preferably used.

The lignin sulfonic acid compound can be in the form of a salt. Examples of the salt include monovalent metal salts, divalent metal salts, ammonium salts, and organic ammonium salts. Among these salts, calcium salts, magnesium salts, sodium salts, and calcium-sodium mixed salts are preferably used.

The lignin sulfonic acid compound usually has at least one functional group moiety capable of reacting with the aromatic water-soluble compound constituting the constituent unit (II). Examples of the moiety include carboxy groups, hydroxy groups (phenolic hydroxy groups and alcoholic hydroxy groups), thiol groups, sulfo groups, aromatic rings, ether bonds, and alkyl chains. In one aspect, the lignin derivative compound is formed by binding the functional group moiety of the lignin sulfonic acid compound to the aromatic water-soluble compound, either directly or via a condensing agent such as formaldehyde.

A production method and the origin of the lignin sulfonic acid compound are not particularly limited, and any of a natural product of the lignin sulfonic acid compound and a synthetic product thereof may be used. The lignin sulfonic acid compound is one of main components of sulfite pulp waste fluid resulting from wood pulping under acidic conditions. Therefore, a lignin sulfonic acid compound derived from sulfite pulp waste fluid may be used.

- Constituent unit (II) -

The constituent unit (II) is a constituent unit derived from an aromatic water-soluble compound.

The aromatic water-soluble compound is a compound having at least one aromatic skeleton and exhibiting solubility in water. The aromatic water-soluble compound is preferably a compound capable of binding to a functional group of the lignin sulfonic acid compound by a chemical reaction, more preferably a compound capable of reacting with a functional group of the lignin sulfonic acid compound serving as a main component of sulfite pulp waste fluid. The chemical reaction is not particularly limited, and examples of the chemical reaction include a radical reaction, ionic bonding, coordination bonding, a condensation reaction, a reaction involving hydrolysis, a reaction involving dehydration, a reaction involving oxidation, a reaction involving reduction, and a reaction involving neutralization.

The aromatic water-soluble compound preferably has an alkylene oxide chain or a polar group. This can result in good reactivity in the formation of a bond between the constituent units (I) and (II). The polar group may be an ionic functional group. Examples of the polar group include a carboxy group, a hydroxy group, a sulfo group, a nitroxy group, a carbonyl group, a phosphoric acid group, an amino group, and an epoxy group. The polar group is preferably an anionic functional group, such as a hydroxy group, a carboxy group, a sulfo group, or a phosphoric acid group, and is more preferably a carboxy group or a sulfo group. The anionic functional group of the lignin derivative compound can be observed quantitatively and qualitatively by instrumental analysis such as NMR and IR.

Examples of the aromatic water-soluble compound include the following compounds.

(Aromatic water-soluble compound having alkylene oxide chain)

The number of carbon atoms of an alkylene oxide unit constituting the alkylene oxide chain (group) is not particularly limited and is usually from 2 to 18, preferably from 2 to 4, and more preferably from 2 to 3. Examples of the alkylene oxide unit include an ethylene oxide unit, a propylene oxide unit, and a butylene oxide unit. The alkylene oxide unit is preferably an ethylene oxide unit or a propylene oxide unit. The average number of moles of the alkylene oxide unit added is usually 20 or more or 25 or more, preferably 30 or more, and more preferably 35 or more. This can result in good dispersibility. The upper limit of the average number of moles of the alkylene oxide unit added is preferably 300 or less, more preferably 200 or less, and still more preferably 150 or less. Thus, dispersion retention can be substantially prevented from decreasing. Hence, the average number of moles of the alkylene oxide unit added is preferably 20 to 300, or 25 to 300, more preferably 30 to 200, and still more preferably 35 to 150. The above-mentioned average number of moles of the alkylene oxide unit added is merely a tentative standard. Regardless of whether or not the above-mentioned ranges are satisfied, an alkylene oxide chain to which the alkylene oxide units are not repeatedly added (a monoalkylene oxide group) may be included.
The polyalkylene oxide chain can be composed of a single alkylene oxide group alone or two or more alkylene oxide groups. The alkylene-oxide-group addition form of the polyalkylene oxide chain composed of two or more alkylene oxide groups may be a random form, a block form, or a mixture of these two forms. A terminal unit of the polyalkylene oxide chain is usually, but not limited to, a hydroxy group, and may be an alkyl ether or a carboxylic acid ester without interfering with binding to the lignin sulfonic acid compound.
Examples of the aromatic water-soluble compound having the alkylene oxide chain include oxyalkylene-group adducts to aromatic compounds, such as phenol, cresol, nonylphenol, naphthol, methylnaphthol, butylnaphthol, bisphenol A, and bisphenol S. More specific examples of the aromatic water-soluble compounds having the alkylene oxide chain include polyalkylene oxide alkyl phenyl ethers, polyalkylene oxide phenyl ethers, polyalkylene oxide alkyl naphthyl ethers, and polyalkylene oxide naphthyl ethers. From the viewpoint of achieving good co-condensation, among them, the aromatic water-soluble compounds having the alkylene oxide chain is preferably benzene ring derivatives, more preferably at least any of polyalkylene oxide alkyl phenyl ethers and polyalkylene oxide phenyl ethers, and still more preferably polyalkylene oxide phenyl ethers (particularly, oxyalkylene group adducts to phenol) (for example, poly(ethylene oxide) monophenyl ether and poly(propylene oxide) monophenyl ether; a preferred range of the average number of moles of an ethylene oxide unit or a propylene oxide unit added is as described above). The aromatic water-soluble compound having the alkylene oxide chain may be a single type or a combination of two or more types thereof.

(Aromatic water-soluble compound having carboxy group)

Examples of the aromatic water-soluble compound having the carboxy group include naphthalene or benzene ring derivatives having at least one carboxy group. More specific examples of the aromatic water-soluble compound having the carboxy group include isophthalic acid, oxynaphthoic acid, benzoic acid, hydroxybenzoic acid, and isomers thereof. From the viewpoint of achieving good reactivity, the aromatic water-soluble compound having the carboxy group is preferably o-hydroxybenzoic acid, m-hydroxybenzoic acid, and p-hydroxybenzoic acid, and more preferably p-hydroxybenzoic acid. The aromatic water-soluble compound having the carboxy group may be a single type or a combination of two or more types thereof.

(Aromatic water-soluble compound having sulfo group)

Examples of the aromatic water-soluble compound having the sulfo group include alkylnaphthalene sulfonic acid, alkylphenol sulfonic acid, aniline sulfonic acid, and alkylbenzene sulfonic acid. More specific examples of the aromatic water-soluble compound having the sulfo group include naphthalenesulfonic acid, methylnaphthalenesulfonic acid, butylnaphthalenesulfonic acid, phenolsulfonic acid, cresol sulfonic acid, aniline sulfonic acid, benzene sulfonic acid, toluene sulfonic acid, and isomers and condensates thereof. Examples of the condensates include a naphthalene sulfonic acid formaldehyde condensate. From the viewpoint of achieving high reactivity, the condensates are preferably a phenol derivative having a sulfo group and aniline sulfonic acid, more preferably phenol sulfonic acid and aniline sulfonic acid, and still more preferably aniline sulfonic acid. The aromatic water-soluble compound having the sulfo group may be a single type or a combination of two or more types thereof.

(Other aromatic water-soluble compounds)

Examples of other aromatic water-soluble compounds include aromatic water-soluble compounds not having any of an alkylene oxide chain, a carboxy group, and a sulfo group, and specific examples thereof include (alkyl)phenols, such as phenol and cresol. The other aromatic water-soluble compounds may be a single type or a combination of two or

more types thereof.

The aromatic water-soluble compound includes at least the aromatic water-soluble compound having the alkylene oxide chain, and is more preferably the aromatic water-soluble compound having the alkylene oxide chain alone or a combination of the aromatic water-soluble compound having the alkylene oxide chain and the aromatic water-soluble compound having the carboxy group and/or the aromatic water-soluble compound having the sulfo group.

The constituent unit (I) may be a constituent unit derived from a single type or two or more types of the aromatic water-soluble compound. The aromatic water-soluble compound may be a single type or a combination of two or more types thereof, and is preferably the aromatic water-soluble compound having the alkylene oxide chain alone or a combination of the aromatic water-soluble compound having the alkylene oxide chain and the aromatic water-soluble compound having the carboxy group and/or the aromatic water-soluble compound having the sulfo group.

- Other constituent unit (III) -

The lignin derivative compound may include a constituent unit (III) other than the constituent units (I) and (II). Examples of the constituent unit (III) include constituent units derived from: aromatic compounds other than aromatic water-soluble compounds (for example, simple aromatic hydrocarbon compounds, such as benzene and naphthalene) and (poly)alkylene glycol alkenyl ether compounds; and water-soluble polyalkylene glycols having hydrogen atoms at both terminals, polyoxyalkylene compounds, polycarboxylic acid compounds, and polyester compounds (for example, a polymer block described in WO 2018/56124). The constituent unit (III) may be a single type or a combination of two or more types thereof.

[1.2 Composition ratio of constituent units of lignin derivative compound]

The weight ratio (I)/(II) of the constituent unit (I) to the constituent unit (II) is usually 1/99 to 99/1, preferably 2/98 to 90/10, more preferably 5/95 to 70/30, or 10/90 to 70/30, and still more preferably 15/85 to 70/30. The weight ratio (I)/(II) is 70-15/30-20 (when the total of (I) and (II) is taken as 100% by weight).

When the constituent unit (III) is included, the weight ratio of the constituent unit (III) is usually 5% by weight or lower, preferably 3% by weight or lower, and more preferably 2% by weight or lower with respect to 100% by weight of the total of (I) and (II).

(I)/(II) is defined as (weight of solid contents of lignin sulfonic acid compound before reaction)/(weight of solid contents of aromatic water-soluble compound before reaction) in a reaction of the lignin sulfonic acid compound and the aromatic water-soluble compound. This method is used also for measurement in Examples described later.

When the constituting unit (II) includes a constituent unit derived from a compound other than the aromatic water-soluble compound having the alkylene oxide chain, the ratio of the constituent unit derived from the aromatic water-soluble compound having the alkylene oxide chain the constituting unit (II) is usually 50% by weight or higher, preferably 60% by weight or higher, more preferably 70% by weight or higher, and still more preferably 80% by weight or higher. The upper limit of the ratio is not particularly limited and is beneficially 100% by weight or lower.

The weight ratio of the above-described constituent units corresponds to the ratio of compounds to be used as raw materials at the start of the reaction.

[1.3 Salt of lignin derivative compound]

The lignin derivative compound is beneficially a reaction product obtained by the above-described reaction and may be either a free acid or a neutralized salt thereof. Because of easiness of storage and use of a polymer, a neutralized salt is preferably used. Examples of the neutralized salt of the reaction product include: alkali metal salts, such as sodium salts and potassium salts; alkaline earth metal salts, such as calcium salts; ammonium salts; and organic amine salts.

[1.4 Physical properties of lignin derivative compound]

- Weight average molecular weight -

The weight average molecular weight of the lignin derivative compound is, although not particularly limited to, preferably 1,000 to 500,000, more preferably 2,000 to 300,000, and still more preferably 5,000 to 100,000. In the present invention, the weight average molecular weight can be measured by a known method of polyethylene glycol conversion using gel permeation chromatography (GPC).

Examples of GPC measurement conditions include the following conditions. Also, in Examples described later, values are measured under these conditions.

Measuring device: manufactured by Tosoh Corporation
Columns to be used: Shodex Column OH-pak SB-806HQ, SB-804HQ, SB-802.5HQ
Eluent: 0.05 mM sodium nitrate/acetonitrile 8/2 (v/v)
Reference material: polyethylene glycol (manufactured by Tosoh Corporation or GL Sciences Inc.)
Detector: differential refractometer (manufactured by Tosoh Corporation)

- Peak area ratio of high molecular weight components -

The peak area ratio of high molecular weight components of the lignin derivative compound is usually 80% or higher, and preferably 85% or higher. The upper limit of the peak area ratio is 97% or lower, and more preferably 95% or lower. Within the above-mentioned range, the constituent units (I) and (II) in the lignin derivative compound are present in a well-balanced fashion and can exhibit antistatic effects. In the present specification, the peak area ratio of the high molecular weight components means the ratio of the peak area value of components with a weight average molecular weight of 1,200 or more to the peak area value of all components in a chart obtained when UV (detection wavelength: 280 nm) is used in the gel permeation chromatography (GPC) measurement of the lignin derivative compound, and can be calculated by the following formula.

Peak area ratio of high molecular weight components = (area value of high molecular weight components in GPC chart (280 nm))/(area value of all components in GPC chart (280 nm))

A method of specifying the area values will be described with reference to the GPC chart in FIG. 1. In FIG. 1, point (1) represents an elution start point, point (2) represents an elution end point, and point (3) represents a value corresponding to a weight average molecular weight of 1,200. The area value of the high molecular weight components in the above-mentioned formula is the point of intersection with a straight line connecting the points (1) and (2) (baseline: a dotted line in FIG. 1). The area value of all components means the area of a portion enclosed by the straight line connecting the points (1) and (2) (baseline: the dotted line in FIG. 1) and a curve extending from the point (1) to the point (2). The peak area value of components with a weight average molecular weight of 1,200 or more means the area of a portion enclosed by a part of the baseline from the point (1) to the point (3), a straight line (a dot-and-dash line in FIG. 1) extending perpendicularly to the baseline from the point (3), and the curve. Conditions for the GPC measurement can be the same as the GPC conditions for the weight average molecular weight measurement described above.

[1.5 Method for producing lignin derivative compound]

The preparation of a lignin derivative is beneficially performed by a method of reacting a raw material compound including the lignin sulfonic acid compound (hereinafter, referred to as the compound (i)) and the aromatic water-soluble compound (hereinafter, referred to as the compound (ii)). Examples of the method include a method of reacting the lignin sulfonic acid compound with the aromatic water-soluble compound. Specific examples of the method include condensation (for example, formaldehyde condensation) of, a radical reaction of, and ionic bonding of the aromatic water-soluble compound with the lignin sulfonic acid compound. Examples of a method for the formaldehyde condensation include a method of adding formaldehyde to the lignin sulfonic acid compound and binding the resultant to the aromatic water-soluble compound. Examples of a method for the radical reaction includes a method of causing a radical initiator to act on the lignin sulfonic acid compound and thereby drawing out a hydrogen radical and then performing a radical reaction of at least one aromatic water-soluble compound and the generated radical.

A method for producing the lignin sulfonic acid compound serving as a raw material is not particularly limited. The lignin sulfonic acid compound can be produced, for example, by a method of extracting from sulfite pulp waste fluid resulting from wood pulping under acidic conditions (for example, a method of filtering the waste fluid, giving at least one of alkali reaction treatment, air oxidation treatment, and oxygen treatment to the resulting filtrate, as necessary, and then precipitating the resultant by pH adjustment and collecting a precipitate). In addition, a processed powder product having undergone drying treatment such as powder drying may be used. Such powder form leads to ease of handling.

The lignin sulfonic acid compound may be a commercially-available product, such as VANILLEX HW (manufactured by Nippon Paper Industries Co., Ltd.), SAN-X M (manufactured by Nippon Paper Industries Co., Ltd.), PEARLLEX NP (manufactured by Nippon Paper Industries Co., Ltd.), or SUNFLO RH (manufactured by Nippon Paper Industries Co., Ltd). The lignin sulfonic acid compound may be in the form of a salt, such as a monovalent metal salt, a divalent metal salt, an ammonium salt, or an organic ammonium salt, (preferably a monovalent metal salt or a divalent metal salt, and more preferably a calcium salt, a magnesium salt, a sodium salt, or a calcium-sodium mixed salt).

A temperature for the reaction of the lignin sulfonate compound and the aromatic compound is beneficially appropriately set, depending on a solvent to be used, and is not particularly limited, but is usually 0°C to 200°C, and

preferably 45°C to 150°C. When a compound having a low boiling point is used as a reaction solvent, the reaction is preferably performed under pressure by using an autoclave to increase a reaction rate.

A method for the reaction of the lignin sulfonic acid compound and the aromatic water-soluble compound may be either a solution reaction method or a mass reaction method. When the solution reaction method is applied, a solvent may be used. Examples of the solvent include: water; alcohols, such as methyl alcohol, ethyl alcohol, and isopropyl alcohol; aromatic hydrocarbons, such as benzene, toluene, and xylene; aliphatic hydrocarbons, such as cyclohexane and n-hexane; esters, such as ethyl acetate; ketones, such as acetone and methyl ethyl ketone; and cyclic ethers, such as tetrahydrofuran and dioxane. Among these solvents, at least any of water and lower alcohols is preferably used, and water is more preferably used. This allows enhancement of the solubility of a raw-material monomer and the resulting copolymer and omission of desolvation processing. A single type of the solvent may be used alone, or two or more types thereof may be used in combination (for example, a water-alcohol mixed solvent).

An antifoaming agent may be used during the preparation of the lignin derivative. Thus, foaming during the reaction can be substantially prevented, whereby a uniform reaction system can be obtained. Examples of the antifoaming agent include an antifoaming agent including a nonionic surfactant as an active component.

In the preparation of the lignin derivative compound, the reaction preferably stably proceeds. Therefore, when the reaction is performed by solution polymerization, the concentration of dissolved oxygen at 25°C in a solvent to be used can be adjusted to preferably 5 ppm or lower, more preferably 0.01 to 4 ppm, still more preferably 0.01 to 2 ppm, and still more preferably 0.01 to 1 ppm. The dissolved oxygen concentration may be adjusted in a reaction tank or may be adjusted before the reaction.

The progress of the reaction is characterized by a remarkable increase in viscosity. When the viscosity reaches to a desired level, the reaction is beneficially stopped by cooling or neutralization.

In the preparation of the lignin derivative compound, water may be added for adjustment to control a condensation viscosity and condensation time. The pH during the reaction may be adjusted to an appropriate value. The reaction is usually performed under acidic conditions. When the reaction system has been already acidic owing to the aromatic compound having the sulfo group and unreacted acid included in the aromatic compound, the reaction is beneficially performed in such acidic region. When the reaction system is not acidic, the reaction may be performed by beforehand adding an acid catalyst, such as hydrochloric acid, phosphoric acid, sulfuric acid, nitric acid, or p-toluenesulfonic acid. The acid is preferably sulfuric acid, but may be any acid besides the above-mentioned specific examples and is not limited to a particular one.

The reaction rate of the aromatic water-soluble compound is preferably 50% or higher, more preferably 60% or higher, and still more preferably 70% or higher. When the reaction rate is 50% or higher, the resulting lignin derivative can exhibit good dispersibility.

The reaction rate of the aromatic water-soluble compound can be measured as follows, and also in Examples described later, the reaction rate is measured in the same manner. First, peak areas before and after the reaction in the GPC measurement by using UV (detection wavelength: 280 nm) are compared. Then, when the peak area before the reaction (that is, the peak area of a peak corresponding to the aromatic water-soluble compound) is [b] and the peak area after the reaction is [a], the reaction rate can be calculated by the formula: ([b]-[a])/[b]. Conditions for the GPC measurement can be the same as the GPC conditions used for the weight average molecular weight measurement described above.

A reaction solution obtained after the completion of the condensation reaction is preferably given aftertreatment, such as heat treatment at a temperature of 60°C to 120°C and a pH of 8.0 to 13.0, neutralization treatment, or adjustment of the pH of the reaction solution (for example, lowering the pH to a range of 1.0 to 4.0, preferably 1.5 to 2.0) to precipitate a reaction product in a solid form. The aftertreatment is usually performed continuously for approximately 10 minutes to 3 hours. This can significantly reduce the aldehyde content (for example, formaldehyde content) of the reaction solution. In addition to or instead of the removal of free formaldehyde by the so-called Cannizzaro reaction described above, for example, other methods of reducing excessive formaldehyde, which are known in the chemistry field related to melamine-formaldehyde resin and phenol-formaldehyde resin, may be of course used. Examples of the methods include addition of a formaldehyde absorbent (addition of sodium hydrogen sulfite in small amounts and addition of hydrogen peroxide).

In the case of treatment to adjust the pH of the reaction solution to precipitate a reaction product in a solid form, an aqueous salt solution as a supernatant fluid is then separated and removed. A free reaction product of which the greater part of the remainder is salt-free is then dissolved again in water in enough amount to achieve a desired solids-concentration, whereby the lignin derivative can be obtained.

The neutralization treatment can be performed using a neutralizer capable of neutralizing a reaction product and a catalyst. Examples of the neutralizer include basic compounds (including salts and hydroxides thereof), such as sodium hydroxide, calcium hydroxide, and $Ba(OH)_2$. Thus, low soluble calcium sulfate or barium sulfate is formed together with free sulfuric acid and precipitates in the form of gypsum or the like. Therefore, the resultant precipitate can be separated and removed by subsequent filtration to obtain a salt-free polymer. In addition, undesirable sodium sulfate may be separated and removed by dialysis or ultrafiltration.

When a by-product, such as sodium sulfate, calcium sulfate, or hydrates thereof, is generated in the addition and neutralization of the basic compound, the removal of the by-product is preferably enhanced by adding the basic compound in a heated state after the reaction and maintaining the heated state. Heating to 40°C or higher is preferred. The retention time of the heated state is preferably 30 minutes or longer. The concentration of the resulting lignin derivative compound may be adjusted as necessary after the completion of the reaction.

[1.6 Optional component of antistatic agent]

The antistatic agent may include an optional component. Examples of the optional component include antistatic components other than the lignin derivative compound, solvents, emulsifiers (surfactants, wetting agents: nonionic, anionic, amphoteric, cationic), antioxidants, heat stabilizers, light stabilizers, UV absorbers, flame retardants, plasticizers, pigments, dyes, dye dispersants, chelating agents, and the unreacted compounds (i) and (ii). The antistatic effect can be further enhanced by including the unreacted compound (ii) as an optional component. The amount of the unreacted compound (ii) is preferably smaller than, more preferably 3/7 or less of the equivalent weight of the constituent unit (ii) in the lignin derivative compound. Including a solvent as an optional component allows easy application to the substrate. Examples of the solvent include: water; lower alcohols, such as methyl alcohol, ethyl alcohol, and isopropyl alcohol; aliphatic hydrocarbons, such as cyclohexane and n-hexane; esters, such as ethyl acetate; and ketones, such as acetone and methyl ethyl ketone.

[2. Usage of antistatic agent]

The antistatic agent can be used to prevent resin from being electrically charged. Examples of a method for obtaining antistatic effects on resin include a method of applying surface treatment to the substrate (usually in a solid form) and a method of kneading the antistatic agent into a resin substrate including a resin material.

[2.1 Surface treatment]

- Substrate -

When a surface of the substrate is treated with the antistatic agent, a main raw material of the substrate is not particularly limited and is beneficially any material capable of being electrically charged, for example, resin, an inorganic material such as silicon, or a combination of these materials. Examples of the resin material include: polyolefin resin, such as polyethylene, polypropylene, ethylene-propylene copolymers, ethylene-vinyl acetate copolymers, and ethylene-ethyl acrylate copolymers; halogen-containing resin polyacrylonitrile, such as polyvinyl chloride, polyvinylidene chloride, polyvinylidene fluoride, and poly(tetrafluoroethylene); styrene resin, such as polystyrene and copolymers of styrene and other monomers (for example, acrylonitrile-styrene (AS) resin and acrylonitrile-butadiene-styrene (ABS) resin); polyester resin, such as polyester, polyethylene terephthalate, polybutylene terephthalate, and unsaturated polyester; acrylic resin, such as polyacrylate and polymethyl methacrylate; epoxy resin; phenolic resin; polyamide resin; polyimide resin; polysulfone resin; polyvinyl alcohol; polyurethane resin; polycarbonate resin; polydimethylsiloxane resin; and combinations thereof, and the resin material may be any of synthetic resin and natural resin. The substrate may include an additive component and a sub-material other than the main raw material, such as a cellulosic material (for example, cellulose fiber or cellulose powder), an inorganic filler (for example, carbon fiber, talc, mica, titanium dioxide, or silica), or cement. Examples of the inorganic material include: metals and semimetals, such as aluminum, nickel-titanium, and stainless steel; silicon; oxides, carbides, nitrides, and borides thereof; glass; and ceramics. The substrate may be a substrate composed of a material having a bio-based content (including, for example, plant-derived resin, such as a cellulosic material, plant-derived polyethylene, polypropylene, or polyester). The bio-based content is the concentration of $^{14}C$ and can be measured by accelerator mass spectrometry. The form of the substrate is not particularly limited, and examples thereof include a molded article, a film, fiber, a plate, and granules.

Examples of the substrate include containers, films, sheets, rolled sheet materials, woven and non-woven fabrics, steel plates, paint-coated surfaces, particles, glass products (glass fiber, glass cloth, glass tape, glass mat), wood, stone, tiles, and concrete. Specific typical examples of the substrate include substrates for electronic components (for example, home appliances and semiconductor transportation trays).

- Treatment of substrate surface -

Examples of a method of treating a surface of the substrate with the antistatic agent include a method of forming a coating layer including the antistatic agent, that is, a layer including the above-mentioned copolymer, on at least a part of the surface of the substrate. The coating layer including the antistatic agent is capable of functioning as an antistatic layer.

Therefore, a laminated material including the substrate and the coating layer is capable of exhibiting antistatic effects owing to the coating layer and thereby substantially preventing the generation of static electricity.

The thickness of the coating layer is difficult to specify uniformly, but an example thereof is usually 1 μm or more, preferably 3 μm or more, and more preferably 5 μm or more. The upper limit of the thickness is usually 30 μm or less, preferably 25 μm or less, and more preferably 20 μm or less. The thickness of the coating layer may or may not be uniform. A part on which the coating layer is to be formed is beneficially at least a part of the surface of the substrate, and any desired part thereof can be selected. For example, when the substrate is rectangular in shape (for example, a film or sheet), any one or more surfaces of the substrate can be selected.

Examples of a coating method include, but are not particularly limited to, bar coating, spin coating, brush coating, roll coating, spray coating, and screen printing. The coating method can be suitably selected, depending on the substrate and the solvent.

[2.2 Kneading]

- Resin material -

When the antistatic agent is kneaded into a resin material, the resin material may be any of thermoplastic resin and thermosetting resin and is preferably thermoplastic resin. Examples of the resin material include: polyolefin resin, such as polyethylene, polypropylene, ethylene-propylene copolymers, ethylene-vinyl acetate copolymers, and ethylene-ethyl acrylate copolymers; halogen-containing resin polyacrylonitrile, such as polyvinyl chloride, polyvinylidene chloride, polyvinylidene fluoride, and poly(tetrafluoroethylene); styrene resin, such as polystyrene and copolymers of styrene and other monomers (for example, acrylonitrile-styrene (AS) resin and acrylonitrile-butadiene-styrene (ABS) resin); polyester resin, such as polyester, polyethylene terephthalate, polybutylene terephthalate, and unsaturated polyester; acrylic resin, such as polyacrylate and polymethyl methacrylate; epoxy resin; phenolic resin; polyamide resin; polyimide resin; polysulfone resin; polyvinyl alcohol; polyurethane resin; polycarbonate resin; polydimethylsiloxane resin; and combinations thereof, and the resin material may be any of synthetic resin and natural resin. The resin substrate can be a single type of resin or a combination of two or more types of resin.

The resin substrate may be a resin substrate having a bio-based content. Examples of the resin substrate include resin substrates including resin materials including plant-derived resin materials such as plant-derived polyethylene, polypropylene, and polyester, and furthermore, when the resin substrate includes a cellulose component, the bio-base content can be adjusted. The bio-based content is the concentration of $^{14}C$ and can be measured by accelerator mass spectrometry.

- Cellulosic material -

The resin substrate may include a cellulosic material. By adding the antistatic agent to a resin material including a cellulosic material, an improvement in cellulose dispersibility as well as antistatic effects can be expected. Examples of the cellulosic material include cellulose powder, cellulose fibers (cellulose nanofibers, cellulose microfibrils), pulp, and modified products thereof (for example, products chemically modified by oxidation, etherification, esterification such as phosphate esterification, silane coupling, fluorination, cationization, or other means).

When the cellulosic material is cellulose powder, the average particle size thereof is preferably 20 μm or larger, more preferably 25 μm or larger, and still more preferably 30 μm or larger. Thus, scattering generated during the addition of cellulose powder to the reaction system is substantially prevented to enhance mixing performance. The upper limit of the average particle size is preferably 100 μm or smaller, more preferably 80 μm or smaller, and still more preferably 60 μm or smaller. This allows kneadability in the formation of an ion complex and the smoothness of the resulting ion complex to be maintained. Therefore, the average particle size of the cellulose powder is preferably within a range of 20 to 100 μm, more preferably within a range of 25 to 80 μm, and still more preferably within a range of 30 to 60 μm.

In the present specification, the average particle size is a particle size at a volume accumulation distribution of 50%. The volume accumulation distribution can be obtained by laser scattering. A measuring device and conditions to be employed are as follows.

Measuring device: laser diffraction particle size analyzer (Mastersizer 3000, from Malvern Panalytical, Spectris)

- Measurement conditions: By adding a sample to a measurement unit under water stirred at 3500 rpm so that the scattering intensity is approximately 10%, the measurement can be performed under the following conditions.

    Analysis: general purpose analysis
    Analysis sensitivity: enhanced
    Light scattering model: Mie theory

The apparent specific gravity of the cellulose powder is preferably 0.1 g/ml or more, and more preferably 0.15 g/ml or more. This can substantially prevent workability from decreasing due to scattering caused by the addition of the cellulose powder to the reaction system. The upper limit of the apparent specific gravity is preferably 0.6 g/ml or less, more preferably 0.45 g/ml or less, and still more preferably 0.4 g/ml or less. This can substantially prevent dispersibility from decreasing due to the occurrence of sedimentation during the addition of the cellulose powder to the reaction system. Hence, the apparent specific gravity is preferably within a range of 0.1 to 0.6 g/ml, more preferably within a range of 0.1 to 0.45 g/ml, and still more preferably within a range of 0.15 to 0.4 g/ml.

In the present specification, the apparent specific gravity is a mass of the cellulose powder per unit volume (1 mL). The apparent specific gravity can be calculated, for example, by adding a sample (for example, 10 g) to a graduated cylinder (for example, with a capacity of 100 mL), tapping the bottom of the graduated cylinder until the height of the sample stops decreasing, reading the graduation on the flattened surface to measure a volume, and dividing the weight of the sample by the volume.

- Other additive components -

The resin substrate may include additive components other than the cellulosic material. Examples of the additive components include, but are not particularly limited to, known additives for resin, such as antioxidants, preservatives, stabilizers, solvents, and inorganic fillers (for example, carbon fiber, talc, mica, titanium dioxide, silica).

- Usage amount -

The amount of the antistatic agent used (the amount of a copolymer with respect to 100% by weight of the resin substrate (including an additive component, the same shall apply hereinafter)) when the antistatic agent is kneaded in is usually 1.0% by weight or higher, preferably 1.5% by weight or higher or 2.0% by weight or higher, and more preferably 2.5% by weight or higher. The upper limit of the amount of the antistatic agent used is usually 80% by weight or lower, preferably 75% by weight or lower, and more preferably 70% by weight or lower. Hence, the amount of the antistatic agent used is usually within a range of 1.0% to 80% by weight, preferably within a range of 1.5% to 80% by weight or 2.0% to 75% by weight, and more preferably within a range of 2.5% to 70% by weight.

When the resin substrate includes the cellulosic material, the ratio of the content of the cellulosic material to the content of the resin substrate is usually 5/95 or higher, preferably 10/90 or higher, and more preferably 15/85 or higher. The upper limit of the ratio is usually 80/20 or lower, preferably 75/25 or lower, and more preferably 70/30 or lower.

The above-mentioned composition is usually in agreement with the amounts of components mixed-in for the manufacture of the composition.

- Kneading method -

A method for kneading (mixing) the antistatic agent into the resin substrate is not particularly limited and can be any common kneading method. A kneading device may be used for the kneading as necessary. During the kneading, the system may be heated to a temperature of, for example, 100°C or higher and preferably 150°C or higher. The upper limit of the temperature is usually 250°C or lower and preferably 200°C or lower.

- Resin composition, Molded product -

The resin composition including the antistatic agent and the resin substrate can exhibit antistatic properties, and, by molding the resin composition, a molded product having good antistatic effects can be obtained. Examples of the uses of the molded product include electronic components (for example, home appliances and semiconductor transportation trays).

[Examples]

Hereinafter, a more specific description about the present invention will be given, but the present invention is not limited by the description.

Production Example 1 (Production of lignin sulfonate (a-1))

Based on sulfite pulping, radiata-pine-derived wood was subjected to sulfite processing at 140°C and pH 2 for 3 hours by using a magnesium sulfite solution having a $SO_2$ concentration of 4g/100mL. The resultant composition was filtrated to obtain a filtrate. The filtrate was adjusted to pH 5.0 by using a sodium hydroxide solution, and concentrated by

using a polysulfone ultrafiltration membrane having a fractional molecular weight of 20,000, and then spray-dried using a spray dryer to obtain lignin sulfonate (sodium salt) (a-1).

Production Example 2 (Production of lignin sulfonate (a-2))

Based on sulfite pulping, radiata-pine-derived wood was subjected to sulfite processing at 140°C and pH 2 for 3 hours by using a magnesium sulfite solution having a $SO_2$ concentration of 4g/100mL. The resultant composition was filtrated to obtain a filtrate. The filtrate was adjusted to pH 12 by using a sodium hydroxide solution, and oxidized by air bubbling at 140°C for 30 minutes, and adjusted to pH 3 by using 70% sulfuric acid. The resultant solids were collected by filtration to obtain lignin sulfonate (sodium salt) (a-2).

Production Example 3 (Production of lignin sulfonate (a-3))

Based on sulfite pulping, radiata-pine-derived wood was subjected to sulfite processing at 140°C and pH 2 for 3 hours by using a magnesium sulfite solution having a $SO_2$ concentration of 4g/100mL. To the resultant composition, a magnesium hydroxide solution was added to have a concentration of 9 wt% with respect to solids, and the resultant mixture was kept at 90°C for 4 hours to be subjected to an alkali reaction. Subsequently, oxygen was blown in at an oxygen pressure of 200 kPa for 2 hours to perform oxygenation, and the resultant was adjusted to pH 7.0 and spray-dried by a spray dryer to obtain lignin sulfonate (sodium salt) (a-3).

Example 1

To a 1L separable flask, 200 g of water, 65 g of the lignin sulfonate (a-1) as the compound (i), 35 g of poly(ethylene oxide) monophenyl ether (average number of moles of ethylene oxide added: 100) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-1).

The weight ratio of the constituent units included in the obtained lignin derivative compound (b-1) was (I)/(II) = 65/35; the peak area ratio of high molecular weight components was 93%; the reaction rate of the compound (i) to the compound (ii) was 80%; and the weight average molecular weight of the compound (b-1) was 40,000 (Table 1).

Example 2

To a 1L separable flask, 200 g of water, 45 g of the lignin sulfonate (a-1) as the compound (i), 55 g of poly(ethylene oxide) monophenyl ether (average number of moles of ethylene oxide added: 50) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-2).

The weight ratio of the constituent units included in the obtained lignin derivative compound (b-2) was (I)/(II) = 45/55; the peak area ratio of high molecular weight components was 90%; the reaction rate of the compound (i) to the compound (ii) was 95%; and the weight average molecular weight of the compound (b-2) was 30,000 (Table 1).

Example 3

To a 1L separable flask, 200 g of water, 30 g of the lignin sulfonate (a-1) as the compound (i), 70 g of poly(ethylene oxide) monophenyl ether (average number of moles of ethylene oxide added: 25) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-3).

The weight ratio of the constituent units included in the obtained lignin derivative compound (b-3) was (I)/(II) = 30/70; the peak area ratio of high molecular weight components was 94%; the reaction rate of the compound (i) to the compound (ii) was 80%; and the weight average molecular weight of the compound (b-3) was 55,000 (Table 1).

Example 4

To a 1L separable flask, 200 g of water, 35 g of the lignin sulfonate (a-2) as the compound (i), 65 g of poly(propylene oxide) monophenyl ether (average number of moles of propylene oxide added: 100) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-4).

The reaction weight ratio of the constituent units included in the obtained lignin derivative compound (b-4) was (I)/(II) = 35/65; the peak area ratio of high molecular weight components was 92%; the reaction rate of the compound (i) to the compound (ii) was 70%; and the weight average molecular weight of the compound (b-4) was 80,000 (Table 1).

Example 5

To a 1L separable flask, 200 g of water, 70 g of the lignin sulfonate (a-3) as the compound (i), 30 g of poly(ethylene oxide) monophenyl ether (average number of moles of ethylene oxide added: 50) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-5).

The reaction weight ratio of the constituent units included in the obtained lignin derivative compound (b-5) was (I)/(II) = 70/30; the peak area ratio of high molecular weight components was 88%; the reaction ratio of the compound (i) to the compound (ii) was 90%; and the weight average molecular weight of the compound (b-5) was 30,000 (Table 1).

Example 6

To a 1L separable flask, 200 g of water, 20 g of the lignin sulfonate (a-3) as the compound (i), 80 g of poly(ethylene oxide) monophenyl ether (average number of moles of ethylene oxide added: 50) as the compound (ii), 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-6).

The weight ratio of the constituent units included in the obtained lignin derivative compound (b-6) was (I)/(II) = 20/80. The peak area ratio of high molecular weight components was 86%. The reaction rate of the compound (i) to the compound (ii) was 90%. The weight average molecular weight of the compound (b-6) was 90,000 (Table 1).

Example 7

To a 1L separable flask, 200 g of water, 30 g of the lignin sulfonate (a-1) as the compound (i), 65 g of poly(ethylene oxide) monophenyl ether (average number of moles of ethylene oxide added: 25) as the compound (ii), 5 g of p-hydroxybenzoic acid, 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent. The resultant mixture was kept stirred while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-7).

The reaction weight ratio of the constituent units included in the obtained lignin derivative compound was (I)/(II) = 30/70; the peak area ratio of high molecular weight components was 93%; the reaction rate of the compound (i) to the compound (ii) was 95%; and the weight average molecular weight of the compound (b-7) was 65,000 (Table 1).

Example 8

To a 1L separable flask, 200 g of water, 70 g of the lignin sulfonate (a-1) as the compound (i), 25 g of poly(ethylene oxide) monophenyl ether (average number of moles of ethylene oxide added: 25) as the compound (ii), 5 g of aniline sulfonate, 10 g of a 37% formaldehyde solution, 40 g of 72% sulfuric acid, and 0.05 g of PRONAL 753 (manufactured by TOHO CHEMICAL INDUSTRY Co., Ltd.) as an antifoaming agent were added. The resultant mixture was kept stirred

while heated at 105°C for 10 hours to complete the reaction. To the resultant solution, 80 g of a 250 g/L calcium hydroxide solution and 20 g of a 31% sodium hydroxide solution were added. After stirring for 1 hour, gypsum resulting from filtration was removed to obtain a lignin derivative compound (b-8).

The reaction weight ratio of the constituent units included in the obtained lignin derivative compound (b-8) was (I)/(II) = 70/30; the peak area ratio of high molecular weight components was 92%; the reaction rate of the compound (i) to the compound (ii) was 95%; and the weight average molecular weight of the compound (b-8) was 25,000 (Table 1).

Comparative Example 1

An aqueous solution including only the lignin sulfonate (a-1) as the compound (i) was used (Table 1).

Comparative Example 2

An aqueous solution including only poly(ethylene oxide) monophenyl ether (average number of moles of ethylene oxide added: 100) as the compound (ii) was used (Table 1).

Comparative Example 3

To a 1L separable flask, 200 g of water, 45 g of the lignin sulfonate (a-1) as the compound (i), and 55 g of poly(ethylene oxide) monophenyl ether (average number of moles of ethylene oxide added: 50) as the compound (ii) were added. The resultant mixture was stirred at room temperature for 10 hours to obtain a mixture of the compound (i) and the compound (ii).

The weight ratio of the compound (i) to the compound (ii) in the obtained mixture was (i)/(ii) = 45/55; the peak area ratio of high molecular weight components was 45%; and the reaction rate of the compound (i) to the compound (ii) was 0%.

[1. Antistatic effect of surface treatment]

[Preparation of IPA dispersions (evaluation of IPA solubility)]

An aqueous solution of each of the lignin derivative compounds obtained in Examples was sufficiently air-dried at 40°C, and 10 g of the resulting solids were mixed with 90 g of IPA, and then the resulting mixture was stirred while heated at 50°C for 1 hour or longer to obtain IPA dispersions of the lignin derivative compound (solid content: 10%).When the same treatment was given to an aqueous solution of each of the lignin derivative compounds and the mixture obtained in Comparative Examples, IPA dispersions were obtained in Comparative Example 2, but a lignin component precipitated and IPA dispersions were not obtained in Comparative Examples 1 and 3 (Table 1).

[Preparation of cellulose substrate]

Approximately 5 g of cellulose powder (KC FLOCK W-100GK, manufactured by Nippon Paper Industries Co., Ltd.) was rolled by a flat press at a pressure of 5 MPa for 1 minute to prepare a cellulose substrate having a thickness of 0.5 mm.

[Preparation of test piece for surface resistivity measurement]

An aqueous solution of the copolymer (solid content: 10%) and an IPA solution (solid content: 10%) were applied to a substrate by using a Myer bar to obtain a film thickness of 10 μm. The substrate used was as follows.

OPP: manufactured by FUTAMURA CHEMICAL CO.,LTD, having a film thickness of 60 μm and dimensions of 30 cm × 10 cm, and a surface not yet having been corona-treated
PET: Lumirror (registered trademark) 75T60, manufactured by Toray Industries, Inc., having a film thickness of 75 μm and dimensions of 30 cm × 10 cm
Cellulose: a rolled cellulose-powder substrate prepared by the above-mentioned preparation method

When any of the aqueous solution samples was applied to the plastic substrates, cissing occurred. In contrast, when any of the aqueous solution samples was applied to the cellulose substrate, the application succeeded without the occurrence of cissing. To 10 g of the aqueous solution sample, 0.1 g of Surfynol (registered trademark) Dynol 604 (nonionic surfactant, manufactured Nissin Chemical Industry Co., Ltd.) was added as a wetting agent, and the resulting solution was

applied to the plastic and cellulose substrates. The application succeeded without the occurrence of cissing. The IPA dispersions were successfully applied to any of the substrates without the occurrence of cissing.

The resulting coated samples were then left standing at a temperature of 25°C and a humidity of 50% for 24 hours to be cured. After curing, a 10-cm section 5 cm located below the coating start point in the coated film was cut to prepare a test piece of 10 cm × 10 cm.

[Surface resistivity measurement]

Measurement was performed according to JIS K 6911 by using a high resistivity meter "Hiresta-UP" (Nitto Denko Corporation). The 10 cm × 10 cm test piece prepared by the method described above was left standing at a temperature of 25°C and a humidity of 50% on a resistivity UFL table (manufactured by Mitsubishi Chemical Corporation) as a measurement table. A URS probe (manufactured by Mitsubishi Chemical Corporation) was used as a probe and lightly pressed against the center of the test piece, and, after a lapse of 10 seconds, a measured value was recorded. The above-described measurement was performed five times in total for the same sample so as to avoid overlapping of measurement points, and the average value obtained was used as surface resistivity (Ω/sq.) to evaluate the surface resistivity (Table 1).

[Table 1]

Table 1

| Example | Lignin derivative compound | | | | IPA solubility | Dispersion medium | Surface resistivity (Ω/□) | | | |
|---|---|---|---|---|---|---|---|---|---|---|
| | Compound I | Compound II | Weight ratio I/II | Area ratio of high molecular weight component (%) | | | OPP | PET | Cellulose | Rating |
| 1 | a-1 | Ph(EO 100) | 65/35 | 93 | ○ | water | cissing | cissing | $5.0\times10^{8}$ | ○ |
| | | | | | | water + wetting agent | $1.0\times10^{8}$ | $1.0\times10^{8}$ | | |
| | | | | | | IPA | $5.0\times10^{8}$ | $5.0\times10^{8}$ | $5.0\times10^{8}$ | |
| 2 | a-1 | Ph(EO 50) | 45/55 | 90 | ○ | water | cissing | cissing | $1.\ 0\times10^{8}$ | ○ |
| | | | | | | water + wetting agent | $6.0\times10^{8}$ | $6.0\times10^{8}$ | | |
| | | | | | | I PA | $1.0\times10^{9}$ | $1.0\times10^{9}$ | $1.0\times10^{8}$ | |
| 3 | a-1 | Ph (EO 25) | 30/70 | 94 | ○ | water | cissing | cissing | $1.0\times10^{9}$ | ○ |
| | | | | | | water + wetting agent | $5.0\times10^{7}$ | $5.0\times10^{7}$ | | |
| | | | | | | IPA | $1.0\times10^{8}$ | $1.0\times10^{8}$ | $1.0\times10^{9}$ | |
| 4 | a-2 | Ph(PO 100) | 35/65 | 92 | ○ | water | cissing | cissing | $5.0\times10^{9}$ | ○ |
| | | | | | | water + wetting agent | $1.0\times10^{9}$ | $1.0\times10^{9}$ | | |
| | | | | | | IPA | $5.0\times10^{9}$ | $5.0\times10^{9}$ | $5.0\times10^{9}$ | |
| 5 | a-3 | Ph(EO 50) | 70/30 | 88 | ○ | water | cissing | cissing | $1.0\times10^{8}$ | ○ |
| | | | | | | water + wetting agent | $1.0\times10^{9}$ | $1.0\times10^{9}$ | | |
| | | | | | | IPA | $5.0\times10^{9}$ | $5.0\times10^{9}$ | $1.0\times10^{8}$ | |
| 6 | a-3 | Ph(EO 50) | 20/80 | 86 | ○ | water | cissing | cissing | $6.0\times10^{9}$ | ○ |
| | | | | | | water + wetting agent | $7.0\times10^{7}$ | $7.0\times10^{7}$ | | |
| | | | | | | IPA | $1.0\times10^{8}$ | $1.0\times10^{8}$ | $6.0\times10^{9}$ | |
| 7 | a-1 | Ph(EO 25) +PHB | 30/70 | 93 | ○ | water | cissing | cissing | $1.0\times10^{9}$ | ○ |
| | | | | | | water + wetting agent | $7.0\times10^{7}$ | $7.0\times10^{7}$ | | |
| | | | | | | IPA | $1.0\times10^{8}$ | $1.0\times10^{8}$ | $1.0\times10^{9}$ | |

(continued)

| Example | Lignin derivative compound | | | | IPA solubility | Dispersion medium | Surface resistivity (Ω/□) | | | |
|---|---|---|---|---|---|---|---|---|---|---|
| | Compound I | Compound II | Weight ratio I/II | Area ratio of high molecular weight component (%) | | | OPP | PET | Cellulose | Rating |
| 8 | a-1 | Ph(EO 25) +ANS | 70/30 | 92 | ○ | water | cissing | cissing | $2.0\times10^8$ | ○ |
| | | | | | | water + wetting agent | $2.0\times10^9$ | $2.0\times10^9$ | | |
| | | | | | | IPA | $5.0\times10^9$ | $5.0\times10^9$ | $2.0\times10^8$ | |

[Table 2]

Table 2

| Comparative Example | Lignin derivative compound | | | | IPA solubility | Dispersion medium | Surface resistivity (Ω/□) | | | |
|---|---|---|---|---|---|---|---|---|---|---|
| | Compound I | Compound II | Weight ratio I/II | Area ratio of high molecular weight component (%) | | | OPP | PET | Cellulose | Rating |
| 1 | a-1 | - | 100/0 | - | × | water | cissing | cissing | $5.0\times10^{12}$ | × |
| | | | | | | water+ wetting agent | $1.0\times10^{9}$ | $1.0\times10^{9}$ | $1.0\times10^{12}$ | |
| | | | | | | IPA | - | - | - | |
| 2 | - | Ph (EO100) | 0/100 | - | ○ | water | cissing | cissing | $5.0\times10^{12}$ | × |
| | | | | | | water + wetting agent | $5.0\times10^{8}$ | $5.0\times10^{8}$ | $3.0\times10^{12}$ | |
| | | | | | | IPA | $1.0\times10^{9}$ | $1.0\times10^{9}$ | $5.0\times10^{13}$ | |
| 3 | a-1 | Ph (EO50) | 45/55 | 45 | × | water | cissing | cissing | $5.0\times10^{12}$ | × |
| | | | | | | IPA | | | | |
| substrate only | | | | | | | $>10^{13}$ | $>10^{13}$ | $5.0\times10^{12}$ | × |

[Footnotes to Tables 1 and 2]

- Definition of abbreviations -

Ph(EO25): poly(ethylene oxide) monophenyl ether (average number of moles of ethylene oxide added: 25)
Ph(EO50): poly(ethylene oxide) monophenyl ether (average number of moles of ethylene oxide added: 50)
Ph(EO100): poly(ethylene oxide) monophenyl ether (average number of moles of ethylene oxide added: 100)
Ph(PO100): poly(propylene oxide) monophenyl ether (average number of moles of propylene oxide added: 100)
PHB: p-hydroxybenzoic acid
ANS: aniline sulfonic acid

- IPA solubility criteria -

◦: In the above-described IPA dispersions preparation test, IPA dispersions (solid content: 10%) were obtained without precipitation of a lignin component.
x: In the above-described IPA dispersions preparation test, a lignin component precipitated and IPA dispersions were not obtained.

- Antistatic evaluation criteria -

◦: Both water (in the case of the cellulose substrate) or water + the wetting agent (in the case of the OPP or PET substrate) and the IPA solution exhibited a surface resistivity on all types of the substrates of $1.0 \times 10^{10}$ or lower.
x: Water (in the case of the cellulose substrate) or water + the wetting agent (in the case of the OPP or PET substrate), or the IPA solution exhibited a surface resistivity on all types of the substrates of higher than $1.0 \times 10^{10}$.

Comparative Example 1 (the lignin sulfonic acid only) and Comparative Example 3 (the mixture of the lignin sulfonic acid and the aromatic water-soluble compound having the alkylene oxide chain) had poor solubility in IPA, and alcohol dispersions with good wettability on the plastic substrates were not obtained. When any of Comparative Example 1 (the lignin sulfonic acid only), Comparative Example 2 (the aromatic water-soluble compound having the alkylene oxide chain, only), and Comparative Example 3 (the mixture of the lignin sulfonic acid and the aromatic water-soluble compound having the alkylene oxide chain) was applied to the cellulose substrate, no significant improvement in surface resistivity was observed.

In contrast, all of Examples 1 to 8 (the lignin derivative compounds) had good solubility in IPA, and great improvement of surface resistivity in both the plastic and cellulose substrates was observed.

These results indicate that the antistatic agent according to the present invention can provide sufficient antistatic properties to various types of substrates, such as plastic and cellulose substrates, and can be used for products for electronic components and environmentally friendly products.

[2. Antistatic effects by kneading]

[Preparation of kneaded substrate]

WINTEC (registered trademark) WSX-03 (a propyleneethylene copolymer, manufactured by Japan Polypropylene Corporation) as polypropylene resin pellets, KC FLOCK W-100GK (manufactured by Nippon Paper Industries Co., Ltd.) as cellulose powder, and an additive were kneaded by using Labo Plastomill (registered trademark 4M150; manufactured by Toyo Seiki Seisaku-sho, Ltd.) at a temperature of 180°C and a rotation speed of 150 rpm for 5 minutes to achieve 40 g in total in terms of solid content, whereby a kneaded substrate was obtained.

Any one of the following additives was used as the additive.

- the sample solutions prepared in Examples and Comparative Examples
- resin for compatibilizing agents (UMEX 1010, manufactured by Sanyo Chemical Industries, Ltd.)
- antistatic resin (PELESTAT 300, manufactured by Sanyo Chemical Industries, Ltd.)

When the additive contained water, the water evaporated completely during the kneading processing and was released to the outside of the system.

The resulting kneaded substrate was then rolled at a temperature of 200°C and a pressure of 5 MPa for 1 minute to obtain an approximately-1-mm-thick test piece approximately 10 cm square having a smooth surface.

[Cellulose dispersibility evaluation]

The obtained test piece was observed under a microscope. An object having a length of 2.5 mm or longer and an aspect ratio of 100 or higher was regarded to be unkneaded cellulose fibers. Observation conditions were as follows.

- The observation was performed with a field of view of 8 mm square, a magnification of ×35, and a resolution of 5.2 μm.
- By observing different parts of the test piece five times in total, observed unmixed cellulose fibers were measured.

The following evaluation criteria were employed.

◦: The number of unkneaded cellulose fibers was 0 in all the observations performed five times in total.
△: One piece or more and three pieces or less of unkneaded cellulose fibers were observed in one to three of the five observations.
x: Three or more pieces of unkneaded cellulose fibers were observed in one to three of the five observations, or one or more pieces of unkneaded cellulose fibers were observed in three or more of the five observations.

[Surface resistivity measurement]

Measurement was performed according to JIS K 6911 by using a high resistivity meter "Hiresta-UP" (manufactured by Mitsubishi Chemical Corporation). A test piece prepared from the kneaded substrate was left standing at a temperature of 25°C and a humidi+ty of 50% on a Teflon (registered trademark) surface of a resistivity UFL table (manufactured by Mitsubishi Chemical Corporation) as a measurement table. A URS probe (manufactured by Mitsubishi Chemical Corporation) was used as a probe and pressed lightly against the center of the test piece, and, after a lapse of 10 seconds, a measured value was recorded. The above-described measurement was performed five times in total for the same sample so as to avoid overlapping of measurement points, and the average value obtained was used as a surface resistivity (Ω/sq.).

[Overall evaluation]

The evaluation result of cellulose dispersibility and the measurement result of surface resistivity were combined into an overall evaluation based on the following criteria.

◦: The cellulose dispersibility was evaluated as "o" and the measured value of surface resistivity was $5.0 \times 10^{12}$ or lower.

△: The cellulose dispersibility was evaluated as "△" and the measured value of surface resistivity was $5.0 \times 10^{12}$ or lower; or the cellulose dispersibility was evaluated as "o" and the measured value of surface resistivity was within a range of $5.0 \times 10^{12}$ to $2.0 \times 10^{13}$.

x: The cellulose dispersibility was evaluated as "x" and/or the measured value of surface resistivity was greater than $2.0 \times 10^{13}$.

A product given the rating △ or higher in the overall evaluation can be evaluated as practical.

The results of cellulose dispersibility, surface resistivity, and overall evaluation of the obtained kneaded substrates are illustrated in Table 3.

[Table 3]

Table 3

| Additive type | | Composite composition (wt%) | | | Cellulose dispersibility | Surface resistivity (Ω/□) | Overall rating |
|---|---|---|---|---|---|---|---|
| | | CP | PP | Additive | | | |
| Example | 1 | 19.8 | 79.2 | 1 | △ | $1.5\times10^{13}$ | × |
| | 1 | 19.4 | 77.8 | 2.8 | ○ | $5.0\times10^{12}$ | ○ |
| | 1 | 18.9 | 75.6 | 5.5 | ○ | $3.0\times10^{12}$ | ○ |
| | 1 | 17.8 | 71.2 | 11 | ○ | $1.5\times10^{12}$ | ○ |
| | 1 | 16.0 | 64.0 | 20 | ○ | $1.0\times10^{12}$ | ○ |
| | 1 | 60.0 | 0.0 | 40 | ○ | $1.0\times10^{12}$ | ○ |
| | 2 | 19.4 | 77.8 | 2.8 | ○ | $4.0\times10^{12}$ | ○ |
| | 3 | 19.4 | 77.8 | 2.8 | ○ | $5.0\times10^{12}$ | ○ |
| | 4 | 19.4 | 77.8 | 2.8 | ○ | $1.0\times10^{12}$ | ○ |
| | 5 | 19.4 | 77.8 | 2.8 | ○ | $3.0\times10^{12}$ | ○ |
| | 6 | 19.4 | 77.8 | 2.8 | ○ | $1.0\times10^{11}$ | ○ |
| | 7 | 19.4 | 77.8 | 2.8 | ○ | $5.0\times10^{11}$ | ○ |
| | 8 | 19.4 | 77.8 | 2.8 | ○ | $4.0\times10^{12}$ | ○ |
| Comparative Example | 1 | 16.0 | 64.0 | 20.0 | △ | $>10^{14}$ | × |
| | 2 | 16.0 | 64.0 | 20.0 | △ | $5.0\times10^{13}$ | × |
| | 3 | 16.0 | 64.0 | 20.0 | △ | $>10^{14}$ | × |
| Resin for compatibilizing agent | | 16.0 | 64.0 | 20.0 | ○ | $>10^{14}$ | × |
| Antistatic resin | | 16.0 | 64.0 | 20.0 | × | $2.0\times10^{11}$ | × |
| None | | 20.0 | 80.0 | 0 | × | $>10^{14}$ | × |

The kneaded substrate including only cellulose and PP and not including any additive was poor in cellulose dispersibility and surface resistivity, which was not practicable. When any of the lignin sulfonic acid compound (Comparative Example 1), the aromatic water-soluble compound having the alkylene oxide chain (Comparative Example 2), and the mixture of the lignin sulfonic acid compound and the aromatic water-soluble compound having the alkylene oxide chain (Comparative Example 3) was used as an additive, the cellulose dispersibility and surface resistivity were not improved to a practical level.

When only the additive for compatibilizing agents was used as an additive, cellulose dispersibility was improved, but surface resistivity was not improved. When only the additive for antistatic agents was used, surface resistivity was improved, but cellulose dispersibility was not improved. Hence, improvement in both surface resistivity and cellulose dispersibility was not achieved.

In contrast, with the addition of a small amount of any of Examples 1 to 8 as the additives a decrease in surface resistivity was observed, and, in some cases, the surface resistivity was better than that of existing antistatic resin. It was confirmed that the addition of a larger amount of any of the additives to the cellulose-containing substrate causes cellulose dispersibility.

These results indicate that the composition according to the present invention is applicable to products for electronic components and environmentally friendly products because the composition can be expected to lead to improvement in surface resistivity and also expected to lead to improvement in cellulose dispersibility when the resin composition includes a cellulose component.

## Claims

**1.** An antistatic agent, comprising a lignin derivative compound, wherein the lignin derivative compound comprises:

a constituent unit (I) derived from a lignin sulfonic acid compound; and

a constituent unit (II) derived from an aromatic water-soluble compound comprising at least an aromatic water-soluble compound having an alkylene oxide chain.

2. The antistatic agent according to claim 1, wherein the aromatic water-soluble compound having the alkylene oxide chain comprises an aromatic water-soluble compound having an alkylene oxide chain with an average number of moles of alkylene oxide added of 25 or more.

3. The antistatic agent according to claim 2, wherein a weight ratio (I)/(II) of the constituent unit (I) to the constituent unit (II) is within a range of 1/99 to 99/1.

4. The antistatic agent according to any one of claims 1 to 3, wherein the aromatic water-soluble compound further comprises an aromatic compound having a carboxy group and/or an aromatic compound having a sulfo group.

5. The antistatic agent according to any one of claims 1 to 4, wherein the lignin derivative compound represented by a formula below has a peak area ratio of a high molecular weight component of 80% or more:

Peak area ratio of high molecular weight components = (area value of high molecular weight components in GPC chart (280))/(area value of all components in GPC chart (280 nm)).

6. The antistatic agent according to any one of claims 1 to 5, wherein the antistatic agent is used for resin.

7. The antistatic agent according to claim 6,
wherein the antistatic agent is used for resin kneading or surface treatment.

8. A resin composition, comprising:

the antistatic agent according to any one of claims 1 to 7; and
a resin substrate.

9. The resin composition according to claim 8, wherein a content of the antistatic agent with respect to 100% by weight of the resin substrate is 1.5% by weight or higher.

10. The resin composition according to claim 8 or 9, wherein the resin substrate further comprises a cellulosic material.

11. A molded product of the resin composition according to any one of claims 8 to 10.

12. A method of treating a substrate, the method comprising
kneading the antistatic agent according to any one of claims 1 to 7 into the substrate or applying the antistatic agent to a surface of the substrate.

13. The method according to claim 12, wherein the substrate is a substrate comprising a cellulosic material and/or a resin material.

Fig. 1

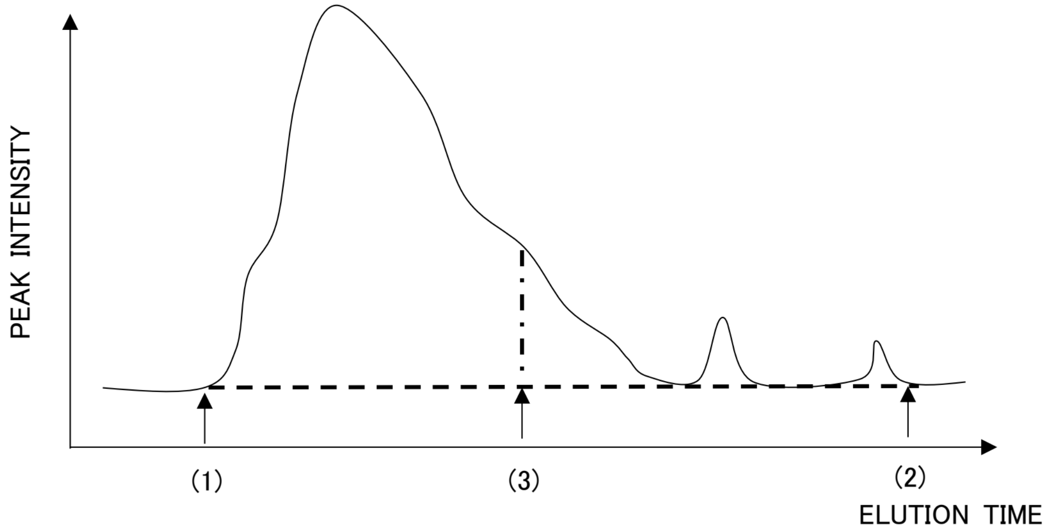


GPC CHART OF LIGNIN DERIVATIVE COMPOUND
(CONCEPTUAL DIAGRAM)

## INTERNATIONAL SEARCH REPORT

International application No. **PCT/JP2024/021834**

**A. CLASSIFICATION OF SUBJECT MATTER**

***C09K 3/16***(2006.01)i; ***C08H 7/00***(2011.01)i; ***C08L 1/00***(2006.01)i; ***C08L 97/00***(2006.01)i; ***C08L 101/00***(2006.01)i; ***D06M 15/17***(2006.01)i; ***D06M 15/53***(2006.01)i

FI: C09K3/16 102H; D06M15/17; D06M15/53; C08H7/00; C08L101/00; C08L1/00; C08L97/00

According to International Patent Classification (IPC) or to both national classification and IPC

**B. FIELDS SEARCHED**

Minimum documentation searched (classification system followed by classification symbols)

C09K3/16; C08H7/00; C08L1/00; C08L97/00; C08L101/00; D06M15/17; D06M15/53

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2019/039609 A1 (NIPPON PAPER INDUSTRIES CO., LTD.) 28 February 2019 (2019-02-28) claims, examples, paragraphs [0053]-[0055], [0065] | 8-9, 11 |
| A | claims, examples, paragraphs [0053]-[0055], [0065] | 1-7, 10, 12-13 |
| X | WO 2021/066166 A1 (NIPPON PAPER INDUSTRIES CO., LTD.) 08 April 2021 (2021-04-08) claims, examples, paragraphs [0090]-[0092], [0102] | 8-9, 11 |
| A | claims, examples, paragraphs [0090]-[0092], [0102] | 1-7, 10, 12-13 |
| A | JP 2011-016741 A (NISSAN CHEMICAL IND LTD.) 27 January 2011 (2011-01-27) claims, examples | 1-13 |
| A | CN 106752105 A (ANHUI BEIMA SCIENCE & TECH CO., LTD.) 31 May 2017 (2017-05-31) claims, examples | 1-13 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

**INTERNATIONAL SEARCH REPORT**
**Information on patent family members**

International application No.
**PCT/JP2024/021834**

| Patent document cited in search report | Publication date (day/month/year) | Patent family member(s) | Publication date (day/month/year) |
|---|---|---|---|
| WO 2019/039609 A1 | 28 February 2019 | US 2020/0255465 A1<br>claims, examples, paragraphs [0086]-[0090], [0125]<br>CN 110997759 A<br>EP 3674352 A1 | |
| WO 2021/066166 A1 | 08 April 2021 | (Family: none) | |
| JP 2011-016741 A | 27 January 2011 | (Family: none) | |
| CN 106752105 A | 31 May 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020122040 A
- WO 2020202593 A
- JP 2018178042 A
- JP 2018123306 A
- WO 201856124 A